# EUROPEAN PATENT SPECIFICATION

(11) **EP 1 055 087 B1**
(45) Date of publication and mention of the grant of the patent: **07.01.2004**
(21) Application number: 99906658.2
(22) Date of filing: 10.02.1999
(51) Int. Cl.: F24D 13/02

(54) **FLOOR HEATING DEVICE WITH SELF-REGULATING CABLE**
BODENHEIZANLAGE MIT SELBSTREGULIERENDEM KABEL
DISPOSITIF DE CHAUFFAGE DE SOL A CABLE AUTO-REGULATEUR

(30) Priority: 11.02.1998 SE 9800383
(43) Date of publication of application: 29.11.2000
(73) Proprietor: Tyco Thermal Controls Nordic Aktiebolag, 430 63 Hindas (SE)
(72) Inventor: THORIN, Micael, S-430 63 Hindas (SE)
(74) Representative: Franzén, Lars Hjalmar
(86) International application number: PCT/SE1999/000174
(87) International publication number: WO 1999/041551

(56) References cited:
- WO-A1-95/25249
- DE-A1- 3 109 866
- FR-A1- 2 756 909
- US-A- 4 733 057

## Description

The invention relates to a floor heating device comprising an electric heating cable extending in lengths forwards and backwards underneath the floor surface to be heated.

Various prior-art devices exist for heating and heat-regulating a floor surface with the aid of an electric heating cable. For example from EP,B1,588 911 is already known a floor structure according to which flooring panels are deposited on a floor surface in spaced-apart relationship so as to form inter-panel channels in which the heating cable is received. The structure also comprises a heat-reflecting sheet applied on the metal panels and tucked into the channels underneath the heating cable.

This arrangement results in a comparatively complex structure and considerable work is required to produce a heatable floor. It is, for example, necessary to deposit the panels and fix them in a predetermined spaced-apart relationship to ensure that the width of the formed channels is adapted to the width of the heating cable that is to be placed inside the channels. The application of the heat-reflecting sheet involves even more extra work.

From EP,B1,360 889 is further known a heating element in the form of a panel formed with channels disposed in parallel and housing a heating cable extending inside the channels. The device comprises semispherical bodies located between the channel mouths, on two opposite sides of the panel, and these bodies form rounded surfaces against which the cable abuts when formed into bends as it exits from one channel to enter into the adjacent one, for the purpose of preventing buckling or cracking damages on the cable. However, this construction is not intended to be built into floors and to serve as a floor heating means but if forms in itself a complete independent heating panel.

From-DE-A1-3109866 a panel construction according to the preamble of claim 1 is known in combination with water pipes for heat transfer.

The invention provides a floor heating device, which is a further development of the prior-art technology and which permits installation in a rapid, practical and convenient manner of a heating cable in a floor, irrespective of the foundation or structure of the latter. The features characterising the floor heating device in accordance with the invention are defined in the appended claims.

The floor heating device accordance with the invention utilises a so called self-regulating cable, a feature which further facilitates the installation of floor heating, irrespective of the type of flooring concerned, as will appear from the following description.

A self-regulating cable comprises two conductors arranged in parallel and surrounded by a semi-conductive plastics material, the conductivity of which varies with the temperature and ceases completely at sufficiently elevated temperatures. When the two conductors are connected to different electrical potentials, a current flows radially through the semi-conductive plastics material intermediate the conductors along the entire cable, whereby heat is generated. The magnitude of the current varies with the conductivity of the plastics material and is at is peak at the lowest-temperature regions of the cable, in which regions consequently heat is generated, and at its bottom at the highest-temperature regions of the cable, in which regions consequently less heat is generated. In this manner, the heating capacity of the cable becomes self-regulating. In addition, the fire-resistance of the cable is higher than that of a conventional cable, since the current between the conductors, and in consequence thereof the heating efficiency, ceases completely in the sections of the cable where the temperature is too high. In addition, a self-regulating cable may be severed into arbitrary lengths, since each conductor need only be connected to its respective potential at one of its ends.

The fact that the electric heating cable is self-regulating is a condition for easy installation in all situations of the device in accordance with the invention. A conventional electric cable, were it arranged in the inventive panels, would fail to satisfy the fire-safety regulations when used for example in combination with wooden flooring applied directly on top of the panels.

The invention will be described in more detail in the following with reference to the accompanying drawings, wherein
Fig 1 is a perspective broken view of the floor heating device,
Fig 2 is a sectional view, which on a larger scale illustrates a channel and a heating cable contained therein, and
Fig 3 is a plan view of a floor during assembly of the floor heating device.

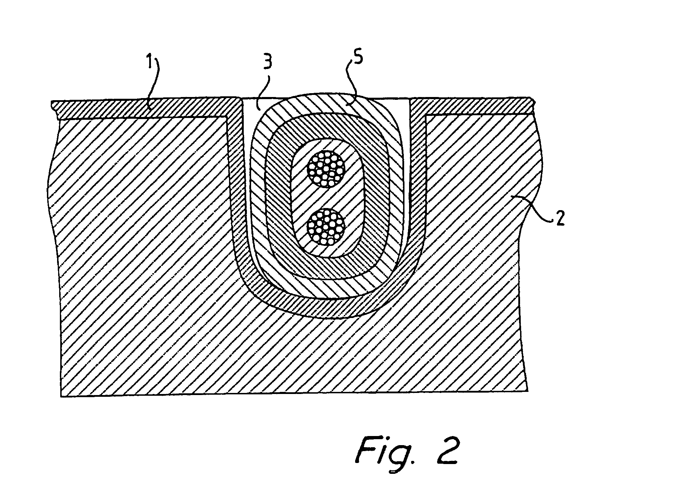

The device comprises square or rectangular panels 1 of metal, preferably of aluminium. On its reverse side, the metal panel 1 is provided with an insulating panel 2, preferably made from cellular plastic. The metal panels 1 are formed with channels 3 extending in inter-parallel relationship and produced by subjecting the panel material to a corrugating operation. The panels 1 and 2 are glued together in a sandwich construction, whereby the channels 3 formed in the metal panel 1 will penetrate into the material of the insulating panel 2, see Fig 2. The channels 3 are configured for receiving an electric cable 5 therein, the latter, after having been deposited inside the channels 3, forming lengths 6 spaced a predetermined centre distance apart. Preferably, the channels 3 are sufficiently deep to ensure that the upper face of the cable 5 will be essentially level with the upper face of the metal panel 1, as appears from Fig 2.

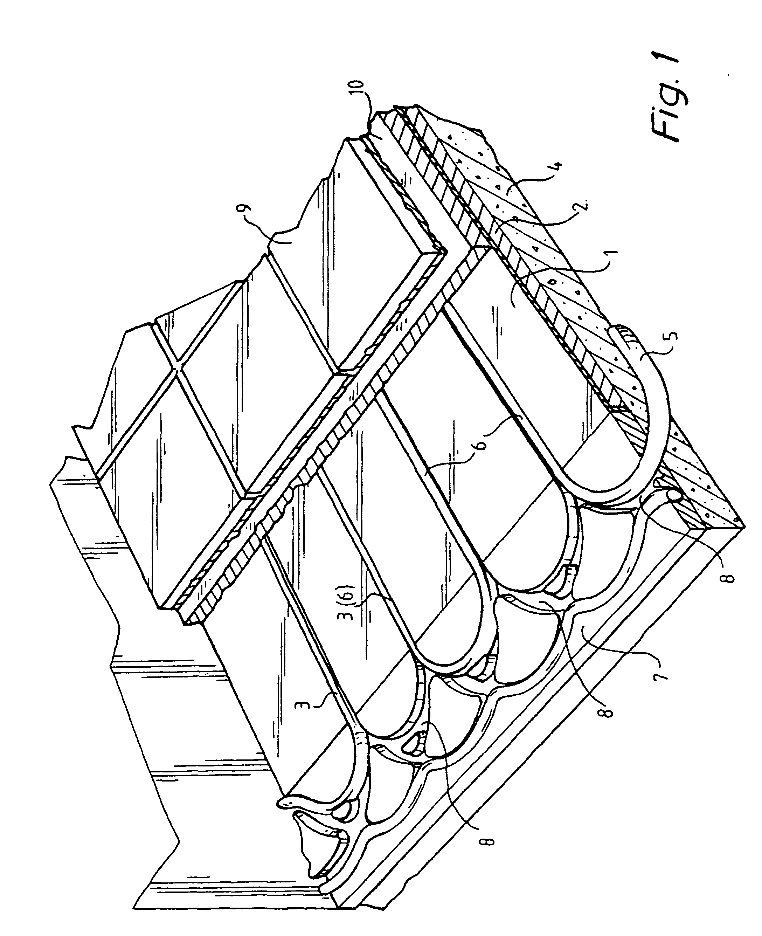

Fig 1 illustrates a metal panel 1 and an insulating panel 2 deposited on a concrete support 4. The latter could, however, equally well consist of wooden boards or be of some other material.

The device also comprises an end piece 7 intended to be placed between a wall in the room wherein floor heating is to be installed, and an end edge face of the first and last panels 1 and 2, respectively, in each row of panels in the room. This end piece 7 is formed with recesses 8 for reception therein of the cable 5 as the latter forms a bend when exiting from one channel 3 and entering into an adjacent one, as appears from Fig 1.

In the installation of prior-art floor-heating technique as applied today, a chipboard or a gypsum board is initially deposited on a wooden or concrete support. In accordance with one alternative, a wire net is then deposited on top of the chipboard/gypsum board, whereupon a heating cable is deposited in a tortuous configuration on the wire net, to which it is then fixed. According to another alternative procedure, the heating cable is deposited in a tortuous pattern directly on the chip-board/gypsum board and is attached thereto by means of clamps. If the top flooring is to consist of ceramic tiles, cement mortar is applied on top of the cable and the wire net, when used, whereupon the ceramic tiles are laid out in the cement mortar. If the flooring is to consist of wood or plastic, a layer of putty is applied on top of the heating cable in the place of cement mortar, whereupon the wooden or plastic flooring is deposited on top of the putty layer.

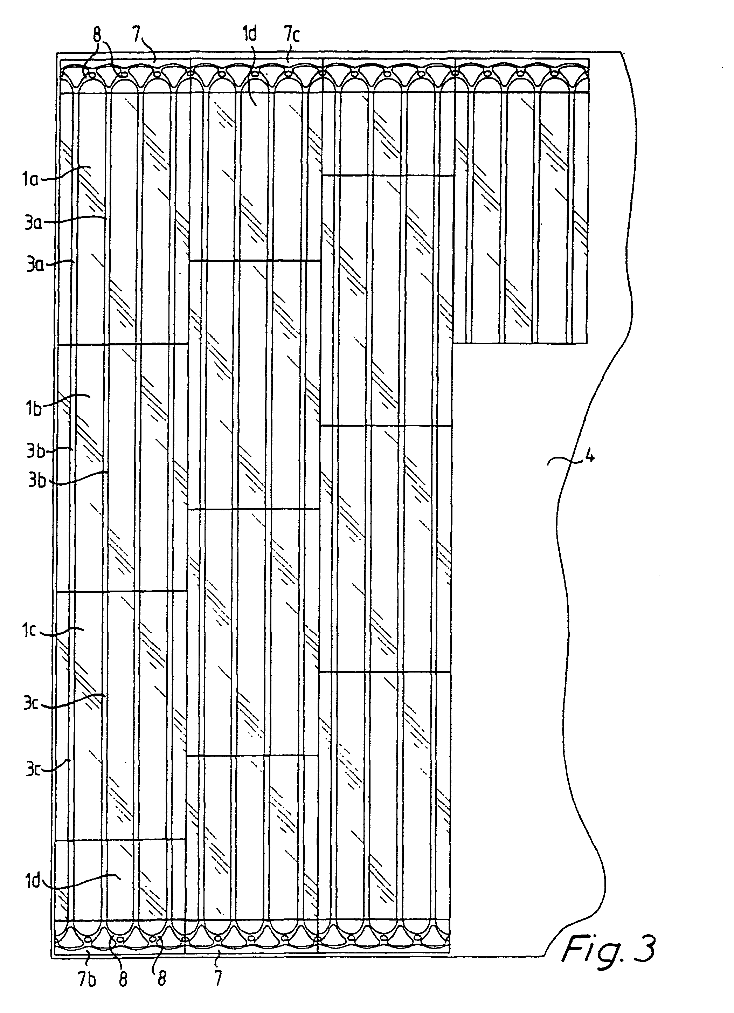

With the aid of the device in accordance with the invention the following procedure is adopted instead. An end piece 7 is placed in a corner of the room to be fitted with floor heating, whereupon a number of metal panels 1a, 1b, 1c together with insulating panels 2 are placed edge to edge in such a manner that each one of the channels 3a of the first deposited panel 1a (in each row) are aligned with the respective channels 3b in the following panel 1b, and said channels 3b are aligned with the respective channels 3c in the panel 1c thereafter, and so on, as appears from Fig 3. Should the next panel 1d be too long, the panel is cut in such a manner that the remaining part of the thus shortened panel together with a new end piece 7b fill up the remaining part of the length of the room. The following row is started by placing a third end piece 7c in juxtaposed position relative to the first end piece 7, whereupon the cut off part of the metal panel 1d together with the insulating panel 2 underneath are laid down in contacting relationship with the end piece 7c and the metal panel 1a. The insulating panels 2 are anchored to the support 4 for instance by means of gluing, and one proceeds in the same manner as described above, until the entire floor support 4 is covered. If the panels 1 and 2 in the last row have a width exceeding the remaining space of the room, they are cut lengthwise.

Remaining measures to be taken to produce the finished floor are performed in the manner described above, which as shown in Fig 1 involves laying of ceramic tiles 9, which are laid in a layer 10 of cement mortar applied on top of the metal panel 1 and cable 5. However, if the surface layer of the floor is to be a laminate flooring material or a wooden floor (parquet), the layered panels 1, 2 need not be anchored to the support. Nor do they need to be covered by putty, since satisfactory fire resistance safety is achieved thanks to the self-regulating properties of the cable.

It is now possible to deposit the heating cable 5 rapidly and conveniently in the channels 3 and to form it into bends in the recesses 8, whereupon the cable ends are connected to the mains voltage. Thanks to the use of a self-regulating cable having built-in temperature protection, which eliminates the risks of excess heating, it is not necessary to calculate a definite length of the heating cable but the cable can be deposited in the simplest possible manner inside the space prepared for it, formed by the channels 3.

The floor heating device in accordance with the invention provides a floor heating arrangement which is efficient and energy-saving. The insulating panel 2 efficiently reduces heat losses into the floor support 4. The metal panel 1 reflects upwards, towards the floor surface, any downwards-directed thermal radiation from the cable 5. The functions of the panel 1 and the panel 2 thus combine to making the floor heating device as efficient as possible.

In addition to the advantages obtained by the floor heating device in accordance with the invention owing to the convenient installation thereof, the heating device is also easily adaptable to the various heating requirements of different floors. For instance, the end piece 7 is configured in a manner making it possible to arrange the heating cable 5 such that the spacing between the cable lengths 6 varies, i.e. in the case of one type of floor the cable lengths may be spaced single distances apart, as shown in Fig 1, whereas in another floor double or triple spacings between the cable lengths 6 may be preferred, in which latter case the intermediate channels 3 thus are not made use of. This possibility is an essential advantage, since it allows adaptation of the effect of the electric floor heating per square meter.

## Claims

1. A floor heating system comprising
a plurality of panels, each including an insulating panel (2) and a rectangular metal sheet (1, 1a, 1b, 1c, 1d) formed with channels (3, 3a, 3b, 3c) , fitted on the insulating panel in a sandwich structure in such a manner that the channels (3, 3a, 3b, 3c) of the metal sheet (1, 1a, 1b, 1c, 1d) partly penetrate into the insulating panel (2),
wherein said panels are deposited on a support (4) of the floor in juxtaposed relationship in the longitudinal and transverse directions in such a manner that each channel (3, 3a, 3b, 3c) of one metal sheet (1, 1b, 1c, 1d) continues into another channel (3b, 3c, 3a, respectively) formed in the adjacent metal sheet (1b, 1c, and 1a, respectively),
**characterized in that** a self regulating electric heating cable (5) is arranged inside said channels (3, 3a, 3b, 3c) so as to extend back and forth underneath a floor surface (9) arranged on top of said floor heating system.

2. A device as claimed in claim 1, wherein said metal sheet is made of aluminium.

3. A device as claimed in claim 1 or 2, wherein said insulating panel is made of a cellular plastics material.

4. A device as claimed in any one of the preceding claims, **characterised in that** the device comprises end pieces (7, 7b, 7c) positioned one at each end side of a row of panels, said end pieces being formed with recesses (8) for reception therein of the bends of the cable (5) formed as said cable leaves one channel (3) to enter into another.

## Patentansprüche

1. Bodenheizsystem, umfassend:
mehrere Platten, die jeweils eine Isolierplatte (2) und eine rechteckige Metallplatte (1, 1a, 1b, 1c, 1d) beinhalten, welche mit Kanälen (3, 3a, 3b, 3c) ausgebildet ist und auf der Isolierplatte in einer Sandwichbauweise solcherart angebracht ist, dass die Kanäle (3, 3a, 3b, 3c) der Metallplatte (1, 1a, 1b, c, 1d) teilweise in die Isolierplatte (2) eindringen,
wobei die Platten auf einer Unterlage (4) des Bodens in angrenzender Beziehung in der Längs- und Querrichtung solcherart angeordnet sind, dass sich jeder Kanal (3, 3a, 3b, 3c) einer Metallplatte (1, 1b, 1c, 1d) in einen anderen Kanal (3b, 3c, bzw. 3a) fortsetzt, der in der benachbarten Metallplatte (1b, 1c bzw. 1a) ausgebildet ist,
**dadurch gekennzeichnet, dass** ein selbstregulierendes, elektrisches Heizkabel (5) in den Kanälen (3, 3a, 3b, 3c) angeordnet ist, so dass es unter einer Bodenoberfläche (9), die auf dem Bodenheizsystem angeordnet ist, vor- und zurück verläuft.

2. Anlage nach Anspruch 1, wobei die Metallplatte aus Aluminium hergestellt ist.

3. Anlage nach einem der Ansprüche 1 oder 2, wobei die Isolierplatte aus einem Schaumkunststoffmaterial hergestellt ist.

4. Anlage nach einem der vorhergehenden Ansprüche, **dadurch gekennzeichnet, dass** die Anlage Endstücke (7, 7b, 7c) umfasst, die eines an jeder Endseite einer Reihe von Platten positioniert sind, wobei die Endstücke mit Aussparungen (8) zur Aufnahme der Biegungen des Kabels (5) darin ausgebildet sind, welche ausgebildet sind, wenn das Kabel aus einem Kanal (3) austritt und in einen anderen eindringt.

## Revendications

1. Système de chauffage de sol comprenant
une pluralité de panneaux, incluant chacun un panneau isolant (2) et une tôle métallique rectangulaire (1, 1a, 1b, 1c, 1d) configurée avec des canaux (3, 3a, 3b, 3c), assemblée au panneau isolant dans une structure en sandwich de telle manière que les canaux (3, 3a, 3b, 3c) de la tôle métallique (1, 1a, 1b, 1c, 1d) pénètrent partiellement dans le panneau isolant (2),
lesdits panneaux étant posés sur un support (4) du sol de manière juxtaposée dans les directions longitudinale et transversale de telle façon que chaque canal (3, 3a, 3b, 3c) d'une tôle métallique (1, 1b, 1c, 1d) se prolonge dans l'autre canal (3b, 3c, 3a respectivement) formé dans la tôle métallique adjacente (1b, 1c et 1a respectivement),
**caractérisé en ce qu'**un câble chauffant électrique (5) auto-régulateur est disposé à l'intérieur desdits canaux (3, 3a, 3b, 3c) de sorte à s'étendre vers l'arrière et l'avant en dessous d'une surface de sol (9) disposée sur le dessus dudit système de chauffage de sol.

2. Dispositif tel que revendiqué dans la revendication 1, lesdites tôles métalliques étant réalisées en aluminium.

3. Dispositif tel que revendiqué dans la revendication 1 ou 2, ledit panneau isolant étant réalisé dans un matériau plastique alvéolaire.

4. Dispositif tel que revendiqué dans l'une quelconque des revendications précédentes, **caractérisé en ce qu'**il comprend des éléments d'extrémité (7, 7b, 7c) positionnés à chaque extrémité d'une rangée de panneaux, lesdits éléments d'extrémité étant configurés avec des cavités (8) pour y loger les coudes du câble (5) formés lorsque ledit câble sort d'un canal (3) pour entrer dans un autre.
